# EUROPÄISCHE PATENTSCHRIFT

(11) **EP 1 016 305 B1**
(45) Veröffentlichungstag und Bekanntmachung des Hinweises auf die Patenterteilung: **28.06.2006**
(21) Anmeldenummer: 98954112.3
(22) Anmeldetag: 27.08.1998
(51) Int. Cl.: H04Q 7/38

(54) **VERFAHREN ZUM SUBSKRIPIEREN VON TELEKOMMUNIKATIONSGERÄTEN BEI MIT DEN TELEKOMMUNIKATIONSGERÄTEN DURCH DRAHTLOSE TELEKOMMUNIKATION VERBINDBAREN GEGENSTATIONEN IN DRAHTLOSEN TELEKOMMUNIKATIONSSYSTEMEN, INSBESONDERE VON DECT-MOBILTEILEN BEI DECT-BASISSTATIONEN IN DECT-SYSTEMEN**
METHOD AND CIRCUIT CONFIGURATION FOR COMPENSATING VARIATIONS IN THE CMOS IMAGE SENSORS RESULTING FROM TEMPERATURE, VOLTAGE AND PRODUCTION
PROCEDE POUR INSCRIRE DES APPAREILS DE TELECOMMUNICATION DANS DES STATIONS DE BASE POUVANT ETRE RELIEES AUXDITS APPAREILS DE TELECOMMUNICATION, DANS DES SYSTEMES DE TELECOMMUNICATION SANS FIL, NOTAMMENT POUR INSCRIRE DES UNITES MOBILES DECT DANS DES STATIONS DE BASE DECT DE SYSTEMES DECT

(30) Priorität: 15.09.1997 DE 19740561
(43) Veröffentlichungstag der Anmeldung: 05.07.2000
(73) Patentinhaber: SIEMENS AKTIENGESELLSCHAFT, 80333 München (DE)
(72) Erfinder: KAMPERSCHROER, Erich, D-46499 Hamminkeln (DE)
(86) Internationale Anmeldenummer: PCT/DE1998/002528
(87) Internationale Veröffentlichungsnummer: WO 1999/014969

(56) Entgegenhaltungen:
- WO-A-96/38990
- US-A- 5 471 671

## Beschreibung

Verfahren zum Subskripieren von Telekommunikationsgeräten bei mit den Telekommunikationsgeräten durch drahtlose Telekommunikation verbindbaren Gegenstationen in drahtlosen Telekommunikationssystemen, insbesondere von DECT-Mobilteilen bei DECT-Basisstationen in DECT-Systemen

In Nachrichtensystemen mit einer Nachrichtenübertragungsstrecke zwischen einer Nachrichtenquelle und einer Nachrichtensenke werden zur Nachrichtenverarbeitung und -übertragung Sende- und Empfangsgeräte verwendet, bei denen
1) die Nachrichtenverarbeitung und Nachrichtenübertragung in einer bevorzugten Übertragungsrichtung (Simplex-Betrieb) oder in beiden Übertragungsrichtungen (Duplex-Betrieb) erfolgen kann,
2) die Nachrichtenverarbeitung analog oder digital ist,
3) die Nachrichtenübertragung über die Fernübertragungsstrekke drahtlos auf der Basis von diversen Nachrichtenübertragungsverfahren FDMA (**F**requency **D**ivision **M**ultiple **A**ccess), TDMA (**T**ime **D**ivision **M**ultiple **A**ccess) und/oder CDMA (**C**ode **D**ivision **M**ultiple **A**ccess) - z.B. nach Funkstandards wie DECT, GSM, WACS oder PACS, IS-54, IS-95, PHS, PDC etc. [vgl. IEEE Communications Magazine, January 1995, Seiten 50 bis 57; D.D. Falconer et al: "Time Division Multiple Access Methods for Wireless Personal Communications"] und/oder drahtgebunden erfolgt.

"Nachricht" ist ein übergeordneter Begriff, der sowohl für den Sinngehalt (Information) als auch für die physikalische Repräsentation (Signal) steht. Trotz des gleichen Sinngehaltes einer Nachricht - also gleicher Information - können unterschiedliche Signalformen auftreten. So kann z.B. eine einen Gegenstand betreffende Nachricht
(1) in Form eines Bildes,
(2) als gesprochenes Wort,
(3) als geschriebenes Wort,
(4) als verschlüsseltes Wort oder Bild übertragen werden.

Die Übertragungsart gemäß (1) ... (3) ist dabei normalerweise durch kontinuierliche (analoge) Signale charakterisiert, während bei der Übertragungsart gemäß (4) gewöhnlich diskontinuierliche Signale (z.B. Impulse, digitale Signale) entstehen.

Ausgehend von dieser allgemeinen Definition eines Nachrichtensystems bezieht sich die Erfindung auf ein Verfahren zum Subskripieren von Telekommunikationsgeräten bei mit den Telekommunikationsgeräten durch drahtlose Telekommunikation verbindbaren Gegenstationen in drahtlosen Telekommunikationssystemen, insbesondere von DECT-Mobilteilen bei DECT-Basisstationen in DECT-Systemen, gemäß dem Oberbegriff des Patentanspruches 1.

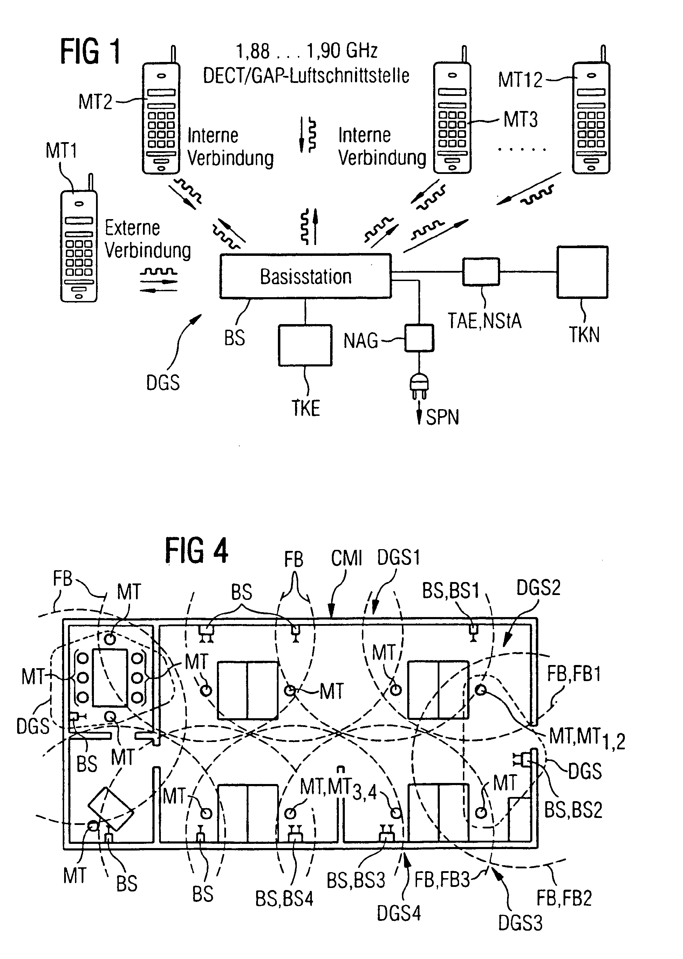

Telekommunikationssysteme der vorstehend definierten Art sind beispielsweise DECT-Systeme [**D**igital **E**nhanced (früher: **E**uropean) **C**ordless **T**elecommunication; *vgl. **(1)***: *Nachrichtentechnik Elektronik 42 (1992) Jan.*/*Feb. Nr. 1, Berlin, DE; U. Pilger "Struktur des DECT-Standards", Seiten 23 bis 29 **in Verbindung mit** der ETSI-Publikation ETS 300175-1...9, Okt. 1992; (**2**): Telcom Report 16 (1993), Nr. 1, J. H. Koch: "Digitaler Komfort für schnurlose Telekommunikation - DECT-Standard eröffnet neue Nutzungsgebiete", Seiten 26 und 27; **(3)***: *tec 2*/*93 - Das technische Magazin von Ascom "Wege zur universellen mobilen Telekommunikation", Seiten 35 bis 42; (**4**): Philips Telecommunication Review, Vol. 49, No. 3, Sept. 1991, R.J. Mulder:" DECT, a universal cordless access system"; **(5)***: *WO 93*/*21719 (FIG 1 bis 3 mit dazugehöriger Beschreibung)]* oder GAP-Systeme (**G**eneric **A**ccess **P**rofile; *vgl. ETSI-Publikation ETS 300444, December 1995, ETSI, FR),* die beispielsweise gemäß der Darstellung in FIGUR 1 aufgebaut sein können. Der GAP-Standard ist eine Untermenge des DECT-Standards, dem die Aufgabe zukommt, die Interoperabilität der DECT-Luftschnittstelle für Telefonanwendungen sicherzustellen.

Nach dem DECT/GAP-Standard können gemäß der Darstellung in FIGUR 1 an einer DECT/GAP-Basisstation BS eines DECT/GAP-Systems DGS über eine für den Frequenzbereich zwischen 1,88 und 1,90 GHz ausgelegte DECT/GAP-Luftschnittstelle maximal 12 Verbindungen nach dem TDMA/FDMA/TDD-Verfahren (**T**ime **D**ivision **M**ultiple **A**ccess/**F**requency **D**ivision **M**ultiple **A**ccess/**T**ime **D**ivision **D**uplex) parallel zu DECT/GAP-Mobilteilen MT1...MT12 aufgebaut werden. Die Zahl 12 ergibt sich aus einer Anzahl "k" von für den Duplexbetrieb des DECT/GAP-Systems DGS zur Verfügung stehenden Zeitschlitzen bzw. Telekommunikationskanälen (k = 12). Die Verbindungen können dabei intern und/oder extern sein. Bei einer internen Verbindung können zwei an der Basisstation BS registrierte Mobilteile, z.B. das Mobilteil MT2 und das Mobilteil MT3, miteinander kommunizieren. Für den Aufbau einer externen Verbindung ist die Basisstation BS mit einem Telekommunikationsnetz TKN, z.B. in leitungsgebundener Form über eine Telekommunikationsanschlußeinheit TAE bzw. eine Nebenstellenanlage NStA mit einem leitungsgebundenen Telekommunikationsnetz oder gemäß der WO 95/05040 in drahtloser Form als Repeaterstation mit einem übergeordneten Telekommunikationsnetz, verbunden. Bei der externen Verbindung kann man mit einem Mobilteil, z.B. mit dem Mobilteil MT1, über die Basisstation BS, die Telekommunikationsanschlußeinheit TAE bzw. Nebenstellenanlage NStA mit einem Teilnehmer in dem Telekommunikationsnetz TKN kommunizieren. Besitzt die Basisstation BS - wie im Fall des Gigaset 951 (Siemens Schnurlostelefon, vgl. telcom Report 16, (1993) Heft 1, Seiten 26 und 27) - nur einen Anschluß zu der Telekommunikationsanschlußeinheit TAE bzw. der Nebenstellenanlage NStA, so kann nur eine externe Verbindung aufgebaut werden. Hat die Basisstation BS - wie im Fall des Gigaset 952 (Siemens Schnurlostelefon; vgl. telcom Report 16, (1993), Heft 1, Seiten 26 und 27) - zwei Anschlüsse zu dem Telekommunikationsnetz TKN, so ist zusätzlich zu der externen Verbindung mit dem Mobilteil MT1 eine weitere externe Verbindung von einem an die Basisstation BS angeschlossenen leitungsgebundenen Telekommunikationsendgerät TKE möglich. Dabei ist es prinzipiell auch vorstellbar, daß ein zweites Mobilteil, z.B. das Mobilteil MT12, anstelle des Telekommunikationsendgerätes TKE den zweiten Anschluß für eine externe Verbindung nutzt. Während die Mobilteile MT1...MT12 mit einer Batterie oder einem Akkumulator betrieben werden, ist die als schnurlose Klein-Vermittlungsanlage ausgebildete Basisstation BS über ein Netzanschlußgerät NAG an ein Spannungsnetz SPN angeschlossen.

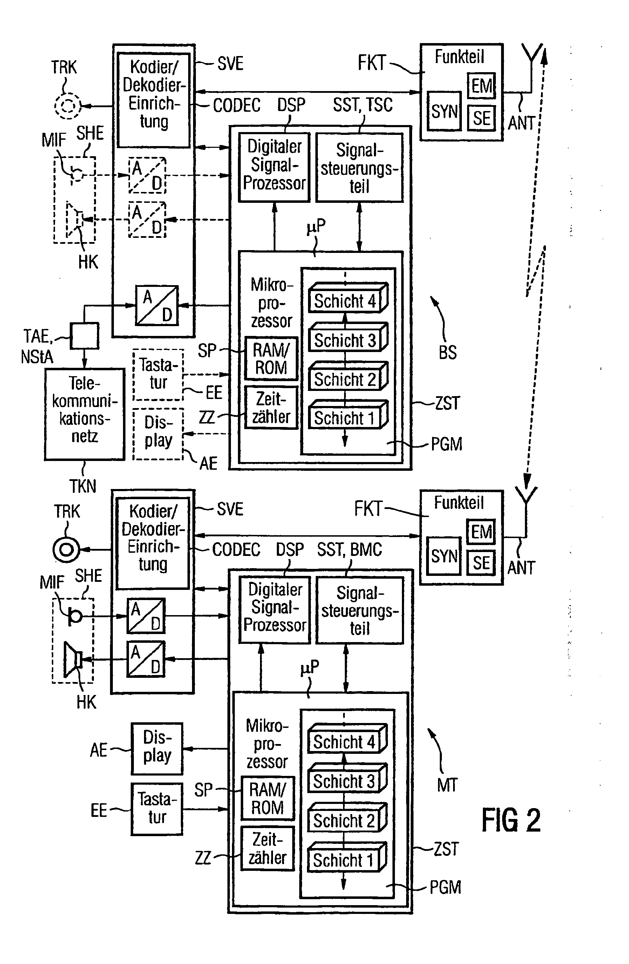

FIGUR 2 zeigt ausgehend von der Druckschrift *Components 31 (1993), Heft 6, Seiten 215 bis 218; S. Althammer, D. Brückmann: "Hochoptimierte IC's für DECT-Schnurlostelefone"* den prinzipiellen Schaltungsaufbau der Basisstation BS und des Mobilteils MT. Die Basisstation BS und das Mobilteil MT weisen danach ein Funkteil FKT mit einer zum Senden und Empfangen von Funksignalen zugeordneten Antenne ANT, eine Signalverarbeitungseinrichtung SVE und eine Zentrale Steuerung ZST auf, die in der dargestellten Weise miteinander verbunden sind. In dem Funkteil FKT sind im wesentlichen die bekannten Einrichtungen wie Sender SE, Empfänger EM und Synthesizer SYN enthalten. In der Signalverarbeitungseinrichtung SVE ist u.a. eine Kodier-/Dekodiereinrichtung CODEC enthalten. Die Zentrale Steuerung ZST weist sowohl für die Basisstation BS als für das Mobilteil MT einen Mikroprozessor µP mit einem nach dem OSI/ISO-Schichtenmodell *[vgl. **(1)**: Unterrichtsblätter - Deutsche Telekom, Jg. 48, 2*/*1995, Seiten 102 bis 111; **(2):** ETSI-Publikation ETS 300175-1...9, Oktober 1992]* aufgebauten Programmodul PGM, einen Signalsteuerungsteil SST und einen Digitalen Signalprozessor DSP auf, die in der dargestellten Weise miteinander verbunden sind. Von den im Schichtenmodell definierten Schichten sind nur die unmittelbar für die Basisstation BS und das Mobilteil MT wesentlichen ersten vier Schichten dargestellt. Das Signalsteuerungssteil SST ist in der Basisstation BS als Time Switch Controller TSC und in dem Mobilteil MT als Burst Mode Controller BMC ausgebildet. Der wesentliche Unterschied zwischen den beiden Signalsteuerungsteilen TSC, BMC besteht darin, daß der basisstationsspezifische Signalsteuerungsteil TSC gegenüber dem mobilteilspezifischen Signalsteuerungsteil BMC zusätzlich Vermittlungsfunktionen (Switch-Funktionen) übernimmt.

Die prinzipielle Funktionsweise der vorstehend aufgeführten Schaltungseinheiten ist beispielsweise in der vorstehend zitierten Druckschrift *Components 31* (1993), *Heft 6*, *Seiten 215 bis 218* beschrieben.

Der beschriebene Schaltungsaufbau nach FIGUR 2 wird bei der Basisstation BS und dem Mobilteil MT gemäß deren Funktion in dem DECT/GAP-System nach FIGUR 1 durch zusätzliche Funktionseinheiten ergänzt.

Die Basisstation BS ist über die Signalverarbeitungseinrichtung SVE und der Telekommunikationsanschlußeinheit TAE bzw. der Nebenstellenanlage NStA mit dem Telekommunikationsnetz TKN verbunden. Als Option kann die Basisstation BS noch eine Bedienoberfläche aufweisen (in FIGUR 2 gestrichelt eingezeichnete Funktionseinheiten), die z.B. aus einer als Tastatur ausgebildeten Eingabeeinrichtung EE, einer als Display ausgebildeten Anzeigeeinrichtung AE, einer als Handapparat mit Mikrofon MIF und Hörkapsel HK ausgebildeten Sprech-/Höreinrichtung SHE sowie einer Tonrufklingel TRK besteht.

Das Mobilteil MT weist die bei der Basisstation BS als Option mögliche Bedienoberfläche mit den zu dieser Bedienoberfläche gehörenden vorstehend beschriebenen Bedienelementen auf.

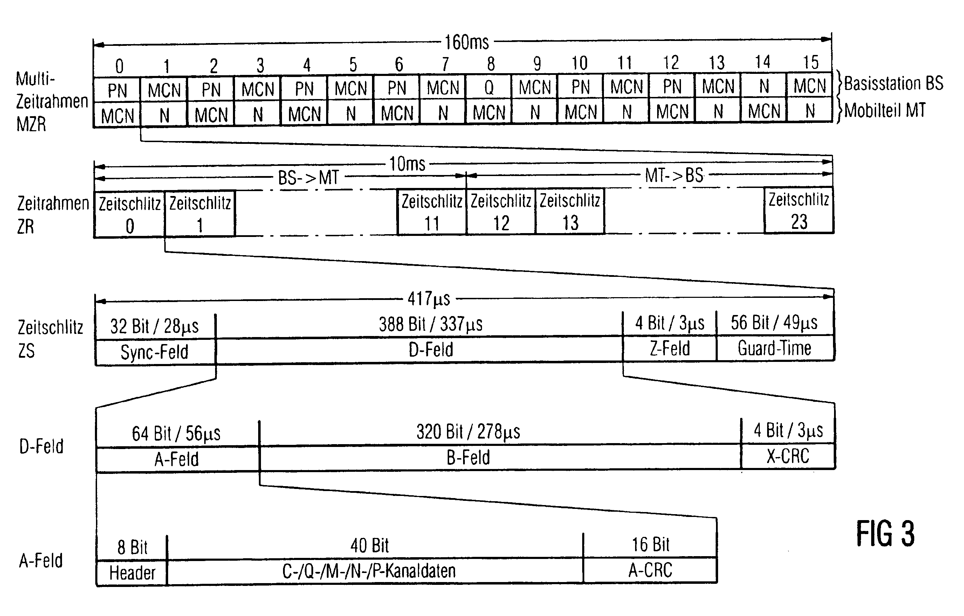

FIGUR 3 zeigt in Anlehnung an die Druckschrift "Nachrichtentechnik Elektronik 42 (1992) Jan./Feb., Nr. 1, Berlin, DE; U. Pilger: "Struktur des DECT-Standards", Seiten 23 bis 29 in Verbindung mit ETS 300 175-1...9, Oktober 1992" die TDMA-Struktur des DECT/GAP-Systems DGS. Das DECT/GAP-System ist ein bezüglich der Vielfachzugriffsverfahren hybrides System, bei dem nach dem FDMA-Prinzip auf zehn Frequenzen im Frequenzband zwischen 1,88 und 1,9 GHz Funknachrichten nach dem TDMA-Prinzip gemäß FIGUR 3 in einer vorgegebenen zeitlichen Abfolge von der Basisstation BS zum Mobilteil MT und vom Mobilteil MT zur Basisstation BS (**T**ime **D**ivision **D**uplex-Betrieb) gesendet werden können. Die zeitliche Abfolge wird dabei von einem Multi-Zeitrahmen MZR bestimmt, der alle 160 ms auftritt und der 16 Zeitrahmen ZR mit jeweils einer Zeitdauer von 10 ms aufweist. In diesen Zeitrahmen ZR werden nach Basisstation BS und Mobilteil MT getrennt Informationen übertragen, die einen im DECT-Standard definierten C-, M-, N-, P-, Q-Kanal betreffen. Werden in einem Zeitrahmen ZR Informationen für mehrere dieser Kanäle übertragen, so erfolgt die Übertragung nach einer Prioritätenliste mit M > C > N und P > N. Jeder der 16 Zeitrahmen ZR des Multi-Zeitrahmens MZR unterteilt sich wiederum in 24 Zeitschlitze ZS mit jeweils einer Zeitdauer von 417 µs, von denen 12 Zeitschlitze ZS (Zeitschlitze 0 ... 11) für die Übertragungsrichtung "Basisstation BS → Mobilteil MT" und weitere 12 Zeitschlitze ZS (Zeitschlitze 12 ... 23) für die Übertragungsrichtung "Mobilteil MT → Basisstation BS" bestimmt sind. In jedem dieser Zeitschlitze ZS werden nach dem DECT-Standard Informationen mit einer Bitlänge von 480 Bit übertragen. Von diesen 480 Bit werden 32 Bit als Synchronisationsinformation in einem SYNC-Feld und 388 Bit als Nutzinformation in einem D-Feld übertragen. Die restlichen 60 Bit werden als Zusatzinformationen in einem Z-Feld und als Schutzinformationen in einem Feld "Guard-Time" übertragen. Die als Nutzinformationen übertragenen 388 Bit des D-Feldes unterteilen sich wiederum in ein 64 Bit langes A-Feld, ein 320 Bit langes B-Feld und ein 4 Bit langes "X-CRC"-Wort. Das 64 Bit lange A-Feld setzt sich aus einem 8 Bit langen Datenkopf (Header), einem 40 Bit langen Datensatz mit Daten für die C-,Q-,M-,N-,P-Kanäle und einem 16 Bit langen "A-CRC"-Wort zusammen .

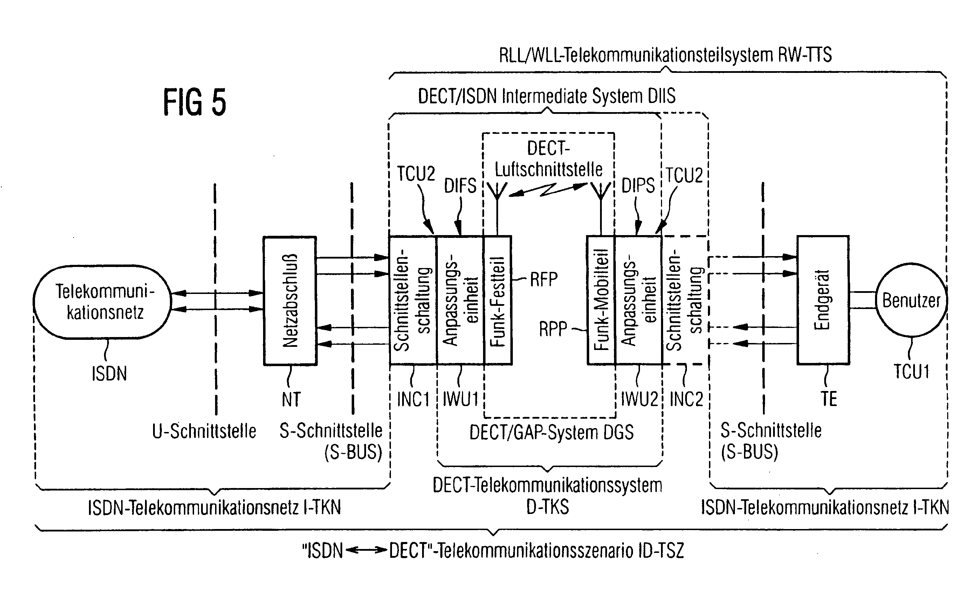

FIGUR 4 zeigt ausgehend von dem DECT/GAP-System DGS nach FIGUR 1 ein zellulares DECT/GAP-Multisystem CMI (Cordless **M**ulticell **I**ntegration), bei dem mehrere der vorstehend beschriebenen DECT/GAP-Systeme DGS mit jeweils einer Basisstation BS und einem/mehreren Mobilteil/en MT an einen beliebigen geographischen Ort, z.B. in einem Verwaltungsgebäude mit großräumigen Etagenbüros, konzentriert - im Sinne einer "Hot Spot"-Anordnung - vorhanden sind. Statt eines geschlossenen" geographischen Ortes, wie das Verwaltungsgebäude, ist aber auch ein "offener" geographischer Ort mit strategischer Telekommunikationsbedeutung, z.B. Plätze in Großstädten mit einem hohen Verkehrsaufkommen, einer großen Ansammlung von Gewerbeeinheiten und einer großen Bewegung von Menschen, für die Installation eines zellularen DECT/GAP-Multisystems CMI möglich. Ein Teil der in dem Großraumbüro angeordneten Basisstationen BS sind dabei im Unterschied zu den in den FIGUREN 1 und 2 gezeigten Basisstationen gemäß der WO 94/10764 als Antenna Diversity-Basisstationen ausgebildet. Die Konzentration der DECT/GAP-Systeme DGS ist dabei so ausgeprägt (lückenlose Funkabdeckung des geographischen Ortes), daß einzelne DECT/GAP-Systeme DGS durch die sich überlappenden zellularen DECT/GAP-Funkbereiche FB in der gleichen Umgebung arbeiten.

Gleiche Umgebung kann dabei je nach Überlappungsgrad bedeuten, daß
a) eine erste Basisstation BS1 eines vorzugsweise als ersten DECT/GAP-System DGS1 in einem ersten Funkbereich FB1 und eine zweite Basisstation BS2 eines zweiten DECT/GAP-System DGS2 in einem zweiten Funkbereich FB2 angeordnet sind und Telekommunikationsverbindungen zu mindestens einem Mobilteil MT_{1,2} aufbauen können,
b) eine dritte Basisstation BS3 eines dritten DECT/GAP-System DGS3 und eine vierte Basisstation BS4 eines vierten DECT/GAP-System DGS4 in einem gemeinsamen dritten Funkbereich FB3 angeordnet sind und Telekommunikationsverbindungen zu mindestens einem Mobilteil MT_{3,4} aufbauen können.

Das in den FIGUREN 1 bis 4 dargestellte Schnurlos-Telekommunikations-Szenario, bei dem DECT-Mobilteile über eine DECT-Luftschnittstelle mit einer privaten (residential) DECT-Basisstation (FIGUR 1) bzw. mit einer oder mehreren privaten oder öffentlichen (public) DECT-Basisstationen (FIGUR 4) verbindbar sind, kann nun gemäß der Publikation *"Vortrag von A. Elberse, M. Barry,* G. *Fleming zum Thema: "DECT* Data *Services - DECT in Fixed and Mobile Networks", 17.*/*18. Juni 1996, Hotel Sofitel, Paris; Seiten 1 bis 12 und Zusammenfassung"* dahingehend erweitert werden, daß die DECT-Mobilteile über die DECT-Luftschnittstelle mit privaten und öffentlichen DECT-Basisstationen verbindbar sind.

Dieses Szenario kann nun gemäß der WO95/05040 (vgl. Figuren 3 bis 8 mit der jeweils dazugehörigen Beschreibung) im Hinblick auf ein "**U**niverselles **M**obil-**T**elekommunikations-**S**ystem" (UMTS) wiederum dahingehend erweitert werden, daß pikozellenbezogene Schnurlos-Telekommunikationssysteme (z.B. die bisher diskutierten DECT-Systeme unter CTM-Gesichtspunkten *(**C**ordless **T**erminal **M**obility; vgl. ETSI-Publikationen **(1):** "IN Architecture and Functionality for the support of CTM", Draft Version 1.10, September 1995; **(2)** : "Cordless Terminal Mobility (CTM) - Phase 1, Service Description", Draft DE*/*NA-010039, Version 6, 2.Oktober 1995)* in eine übergeordnete Netzinfrastruktur (z.B. ISDN-, PSTN-, GSM- und/oder Satelliten-Netze) für Zugriffe *(vgl. ETSI-Publikation "CTM **A**ccess **P**rofile (CAP)" prETS 300824, November 1996)* einzubinden. Dies kann - gemäß dem Patentanspruch 1 der WO95/05040 durch eine als DECT-Repeater ausgebildete DECT-Basisstation erreicht werden. In einem universellen Mobil-Telekommunikationssystem wird DECT vorrangig als eine "Netzzugriffstechnologie" für mobile Kommunikationsdienste *(vgl. Vortrag von A. Elberse, M. Barry, G. Fleming zum Thema: "DECT Data Services - DECT in Fixed and Mobile Networks", 17.*/*18. Juni 1996, Hotel Sofitel, Paris; Seiten 1 bis 12 und Zusammenfassung)* und nicht als Netz verstanden.

Stellvertretend für das vorstehend vorgestellte Szenario zeigt FIGUR 5 -ausgehend von den Druckschriften *"Nachrichtentechnik Elektronik, Berlin 45, (1995), Heft 1, Seiten 21 bis 23 und Heft 3, Seiten 29 und 30" sowie IEE Colloquium 1993, 173; (1993), Seiten 29*/*1 - 29*/*7; W.Hing, F.Halsall: "Cordless access to the ISDN basic rate service"* auf der Basis eines DECT/ISDN Intermediate Systems DIIS gemäß *der ETSI-Publikation prETS 300822, Februar 1997 -* ein "ISDN ↔ DECT"-Telekommunikations**sz**enario ID-TSZ (**I**ntegrated **S**ervices **D**igital **N**etwork ↔ **D**igital **E**nhanced **C**ordless **T**elecommunication) mit einem **I**SDN-**T**elekommuni**k**ations**n**etz I-TKN *[vgl. Druckschrift "Nachrichtentechnik Elektronik, Berlin 41-43, **T**eil:* 1 *bis 10, **T**1: (1991) Heft* 3, *Seiten* 99 *bis 102; **T**2: (1991) Heft* 4, *Seiten 138 bis 143; **T**3: (1991) Heft* 5, *Seiten 179 bis 182 und Heft 6, Sei ten 219 bis 220; **T**4 : (1991) Heft 6, Seiten 220 bis 222 und (1992) Heft 1, Seiten 19 bis 20; **T**5: (1992) Heft 2, Seiten 59 bis 62 und (1992) Heft 3, Seiten 99 bis 102; **T**6: (1992) Heft* 4, *Seiten 150 bis 153; **T**7: (1992) Heft 6*, *Seiten 238 bis 241; **T**8: (1993) Heft 1*, *Seiten 29 bis 33*; ***T**9: (1993) Heft 2*, *Seiten 95 bis 97 und (1993) Heft 3*, *Seiten 129 bis 135; **T**10: (1993) Heft* 4, *Seiten 187 bis 190;"*] und einem mit dem ISDN-Telekommunikationsnetz I-TKN verbundenen DECT-**T**elekommuni**k**ations**s**ystem D-TKS.

Das DECT-Telekommunikationssystem D-TKS kann dabei - wie im weiteren näher ausgeführt werden wird - Bestandteil eines DECT/ISDN Intermediate Sysems DIIS bzw. eines RLL/WLL-Telekommunikationsteilsystems RW-TTS sein. Das DECT-Telekommunikationssystem D-TKS und somit das DECT/ISDN Intermediate System DIIS bzw. das RLL/WLL-Telekommunikationsteilsystem RW-TTS basieren vorzugsweise auf ein DECT/GAP-System DGS wie es beispielsweise in FIGUR 1 dargestellt ist.

Das DECT/ISDN Intermediate System DIIS bzw. das RLL/WLL-Telekommunikationsteilsystem RW-TTS kann alternativ auch auf einem GSM-System basieren (**G**roupe **S**peciale **M**obile oder **G**lobal **S**ystem for **M**obile Communication; vgl. Informatik Spektrum 14 (1991) Juni, Nr. 3, Berlin, DE; A.Mann: "Der GSM-Standard - Grundlage für digitale europäische Mobilfunknetze", Seiten 137 bis 152). Stattdessen ist es im Rahmen eines UMTS-Szenarios auch möglich, daß das ISDN-Telekommunikationsnetz I-TKN als GSM-Netz oder als PSTN-Netz (**P**ublic **S**witched **T**elecommunications **N**etwork) ausgebildet ist.

Darüber hinaus kommen als weitere Möglichkeiten für die Realisierung des DECT/ISDN Intermediate System DIIS bzw. des RLL/WLL-Telekommunikationsteilsystems RW-TTS oder des ISDN-Telekommunikationsnetzes I-TKN die eingangs erwähnten Systeme/Netze sowie zukünftige Systeme/Netze in Frage, die auf die bekannten Vielfachzugriffsmethoden FDMA, TDMA, CDMA (**F**requency **D**ivision **M**ultiple **A**ccess, **T**ime **D**ivision **M**ultiple **A**ccess, **C**ode **D**ivision **M**ultiple **A**ccess) und hieraus gebildete hybride Vielfachzugriffsmethoden basieren.

Die Verwendung von Funkkanälen (z. B. DECT-Kanälen) in klassischen leitungsgebundenen Telekommunikationssystemen, wie dem ISDN, (z.B. RLL/WLL-Szenario) gewinnt zunehmend an Bedeutung, insbesondere vor dem Hintergrund zukünftiger alternativer Netzbetreiber ohne eigenes komplettes Drahtnetz.

So sollen z. B. bei dem RLL/WLL-Telekommunikationsteilsystem RW-TTS die drahtlose Anschlußtechnik RLL/WLL (**R**adio in the **L**ocal **L**oop/**W**ireless in the **L**ocal **L**oop) z.B. unter der Einbindung des DECT-Systems DS dem ISDN-Teilnehmer ISDN-Dienste an Standard-ISDN-Schnittstellen verfügbar gemacht werden (vgl. FIGUR 4).

In dem "ISDN ↔ DECT"-Telekommunikationsszenario ID-TSZ nach FIGUR 4 ist zum einen ein erster Telekommunikationsteilnehmer (Benutzer) TCU1 (**T**ele-**C**ommunication **U**ser) mit seinem Endgerät TE (**T**erminal **E**ndpoint; **T**erminal **E**quipment) z.B. über eine standardisierte S-Schnittstelle (S-BUS), das als lokale Nachrichtenübertragungsschleife ausgebildete - vorzugsweise DECTspezifische und in dem RLL/WLL-Telekommunikationsteilsystem RW-TTS enthaltene - DECT/ISDN Intermediate System DIIS, eine weitere standardisierte S-Schnittstelle (S-BUS), einen Netzabschluß NT (**N**etwork **T**ermination) und eine standardisierte U-Schnittstelle des ISDN-Telekommunikationsnetzes I-TKN und zum anderen ein zweiter Telekommunikationsteilnehmer TCU2 als Endnutzer des DECT/ISDN Intermediate Systems DIIS in die ISDN-Welt mit den darin verfügbaren Diensten eingebunden.

Das DECT/ISDN Intermediate System DIIS besteht im wesentlichen aus zwei Telekommunikationsschnittstellen, einer ersten Telekommunikationsschnittstelle DIFS (**D**ECT **I**ntermediate **F**ixed System) und einer zweiten Telekommunikationsschnittstelle DIPS (**D**ECT **I**ntermediate **P**ortable **S**ystem), die drahtlos, z.B. über eine DECT-Luftschnittstelle, miteinander verbunden sind. Wegen der quasi-ortsgebundenen ersten Telekommunikationsschnittstelle DIFS bildet das DECT/ISDN Intermediate System DIIS die vorstehend in diesem Zusammenhang definierte lokale Nachrichtenübertragungsschleife. Die erste Telekommunikationsschnittstelle DIFS enthält ein Funk-Festteil RFP (**R**adio **F**ixed **P**art), eine Anpassungseinheit IWU1 (**I**nter**W**orking **U**nit) und eine Schnittstellenschaltung INC1 (**IN**terface **C**ircuitry) zur S-Schnittstelle. Die zweite Telekommunikationsschnittstelle DIPS enthält ein Funk-Mobilteil RPP (**R**adio **P**ortable **P**art) und eine Anpassungseinheit IWU2 (**I**nter**W**orking **U**nit) und gegebenenfalls eine Schnittstellenschaltung INC2 (**IN**terface **C**ircuitry) zur S-Schnittstelle. Das Funk-Festteil RFP und das Funk-Mobilteil RPP bilden dabei das bekannte DECT/GAP-System DGS.

Die FIGUR 5 zeigt - wie bereits erwähnt - zum einen (1. Möglichkeit) als typisches RLL/WLL-Szenario wie das DECT/ISDN Intermediate System DIIS im Rahmen des RLL/WLL-Telekommunikationsteilsystem RW-TTS in das ISDN-Telekommunikationsnetz I-TKN als lokale Nachrichtenübertragungsschleife eingebunden ist und zum anderen (2. Möglichkeit) wie das DECT/ISDN Intermediate System DIIS unter CAP-Gesichtspunkten (**C**ordless Terminal Mobility **A**ccess **P**rofile) nur netzseitig mit dem ISDN-Telekommunikationsnetz I-TKN verbunden ist. Bei der 2. Möglichkeit ist die Schnittstellenschaltung INC2 der zweiten Telekommunikationsschnittstelle DIPS zur S-Schnittstelle nicht aktiv oder überhaupt nicht vorhanden. Um diesen Sachverhalt insgesamt grafisch darzustellen und zu untermauern, ist die Schnittstellenschaltung INC2 der zweiten Telekommunikationsschnittstelle DIPS gestrichelt gezeichnet. Während die zweite Telekommunikationsschnittstelle DIPS bei der 1. Möglichkeit beispielsweise nicht mobilteilspezifisch, d.h. mit Bedienoberfläche, ausgebildet ist, ist die zweite Telekommunikationsschnittstelle DIPS bei der 2. Möglichkeit als typisches Mobilteil mit einer Bedienoberfläche ausgebildet.

Für den Aufbau von Telekommunikationsverbindungen zwischen der/den Basisstation/en BS und den Mobilteilen MT in den DECT-Systemen gemäß den FIGUREN 1 bis 5 ist nach dem DECT-Standard beispielsweise die nachfolgend beschriebene Prozedur vorgesehen.

Bei einer "On-air Subskription", d.h. das Anmelden eines DECT-Mobilteils oder sonstiger DECT-Terminals an eine entsprechende DECT-Basisstation über die "Luft" werden vorher Mobilteil, Terminal und Basisstation in einen anmeldebereiten Zustand gebracht.

Wird die Basisstation durch eine Bedienerprozedur in den anmeldebereiten Zustand gebracht, so "broadcastet" sie dies durch Setzen des "Higher Layer Capability"-Bit "a44" [ vgl. ETSI-Publikation ETS 300 175-5, Oktober 1992 Annex F].

Dies geschieht dadurch, daß die Basisstation BS (**R**adio **F**ixed **P**art RFP) gemäß den FIGUREN 1 bis 5 sendet über die DECT-Luftschnittstelle in regelmäßigen Zeitabständen auf Simplex-Übertragungswegen, den sogenannten Dummy-Bearer, Broadcast-Informationen, die von dem Mobilteil MT (**R**adio **P**ortable **P**art RPP) gemäß den FIGUREN 1 bis 5 empfangen werden und diesem für die Synchronisation und den Verbindungsaufbau mit der Basisstation dienen. Die Broadcast-Informationen müssen nicht unbedingt auf einen Dummy-Übertragungsweg (Dummy Bearer) gesendet werden.

Es ist auch möglich, daß kein Dummy-Übertragungsweg vorhanden ist, weil die Basisstation bereits mindestens eine Telekommunikationsverbindung, einen sogenannten Traffic-Übertragungsweg (Traffic-Bearer), zu einem anderen Mobilteil unterhält und auf dem es dann die nötigen Broadcast-Informationen sendet. In diesem Fall kann das Mobilteil MT, RPP, das eine Telekommunikationsverbindung zu der Basisstation BS, RFP haben möchte, die Broadcast-Informationen - wie beim Übertragen der Broadcast-Informationen auf dem Dummy-Übertragungsweg - empfangen.

Die Broadcast-Informationen enthalten - gemäß der ETSI-Publikation ETS 300175-3, Oktober 1992, Kapitel 9.1.1.1 - Informationen über Zugriffsrechte, Systeminformationen und Paging-Informationen.

Das Mobilteil, Terminal MT, RPP scannt nach Basisstationen BS, RFP, welche dieses Bit "a44" gesetzt haben und baut nach erfolgreicher Suche bzw. nach erfolgreichem Scan-Vorgang eine Funkverbindung zu dieser Basisstation Bs, RFP auf.

Der Verbindungsaufbau durch das Mobilteil MT, RPP erfolgt nach den Regeln der Kanalselektion (vgl. ETSI-Publikation ETS 300175-5, Oktober 1992, Kapitel 9 und insbesondere Kapitel 9.3), wonach ein neuer Kanal für den Aufbau einer neuen Verbindung selektiert und eine Verbindungsanforderung (CC-SETUP) zur Basisstation BS, RFP abgesetzt wird.

Sollten mehr als eine Basisstation gleichzeitig das "a44"-Bit gesetzt haben und wie beschrieben "broadcasten", so ist die Wahrscheinlichkeit groß, daß eine falsche Basisstation, für die das Mobilteil MT, RPP keine Zugriffsberechtigung hat, von dem Mobilteil MT, RPP selektiert wird und infolgedessen die Anmeldung fehlschlägt.

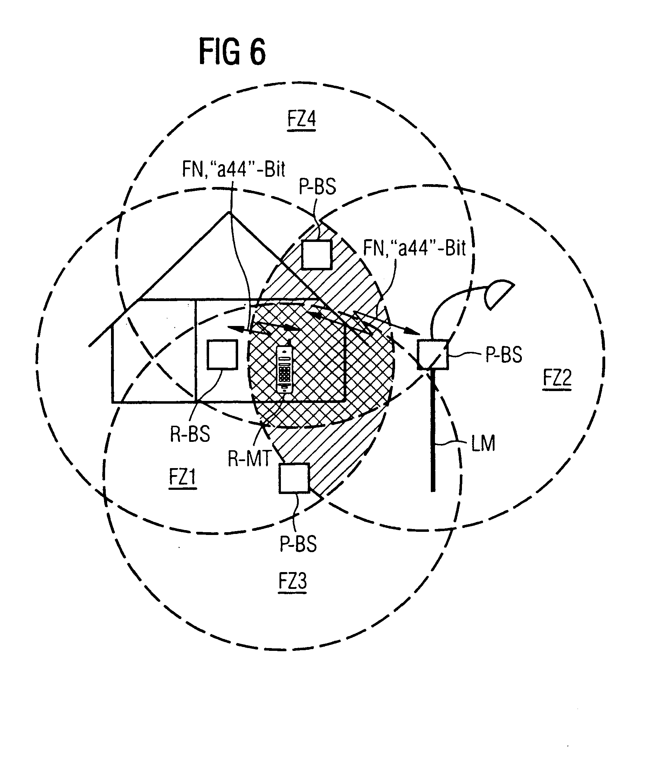

Dieses Resultat eines Anmeldeversuches des Mobilteils bzw. Terminal MT, RPP bei der Basisstation BS, RFP tritt insbesondere dort auf, wo z.B. private Basisstationen und öffentliche Basisstationen benachbart sind bzw. sich private Systeme/private Netze/Funkzellen der privaten Basisstationen und öffentliche Systeme/öffentliche Netze/Funkzellen der öffentlichen Basisstationen überlappen/überschneiden (vgl. FIGUR 6) .

FIGUR 6 zeigt z.B. eine erste Funkzelle FZ1 einer privaten Basisstation (Residential-Basisstation) R-BS und eine zweite Funkzelle FZ2 einer öffentlichen Basisstation (Public-Basisstation) P-BS, die sich überlappen/überschneiden. In diesem Überlappungs- bzw. Überschneidungsbereich (aufwärtsdiagonal schraffierter Bereich) befindet sich z.B. ein privates Mobilteil (Residential-Mobilteil) R-MT.

In der dargestellten Konstellation versucht der Benutzer des Mobilteil R-MT, sein Handgerät an seine private Basisstation R-BS z.b. nach dem DECT-Standard durch das zwischen dem Mobilteil R-MT und der Basisstation R-BS gegenseitige Übertragen von Funknachrichten FN anzumelden. An einem Laternenmast LM ist zudem die öffentliche Basisstation P-BS angebracht, zu der auch der angegebene Funkverkehr besteht.

Während die private Basisstation R-BS in den Funknachricht FN das "a44"-Bit sendet, um anzuzeigen, daß sie anmeldebereit ist, wird das gleiche Bit zum gleichen Zweck auch von der öffentlichen Basisstation P-BS gesendet. Da die öffentliche Basisstation P-BS ständig das "a44"-Bit ausstrahlt, ist diese per Definition immer anmeldebereit. Dies hat zur Folge, daß der Benutzer des privaten Mobilteils R-MT unter Umständenmehrmals vergeblich versucht, sein Handgerät an die private Basisstation anzumelden und schließlich aufgibt.

Alternativ zu dem beschriebenen Fall, daß sich das Mobilteil R-MT im Überlappungs- bzw. Überschneidungsbereich der beiden Funkzellen FZ1, FZ2 befindet, ist es auch möglich, daß durch weitere Funkzellen, z.B. eine dritte Funkzelle FZ3 mit einer darin angeordneten weiteren öffentlichen Basisstation P-BS und eine vierte Funkzelle FZ4 mit einer ebenfalls darin angeordneten weiteren öffentlichen Basisstation P-BS, ein weiterer (kleinerer) Überlappungs- bzw. Überschneidungsbereich (auf- und abwärtsdiagonal schraffierter Bereich) entsteht, in dem das Mobilteil R-MT von den genannten Basissstationen R-BS, P-BS die Funknachrichten FN mit den "a44"-Bits empfangen kann.

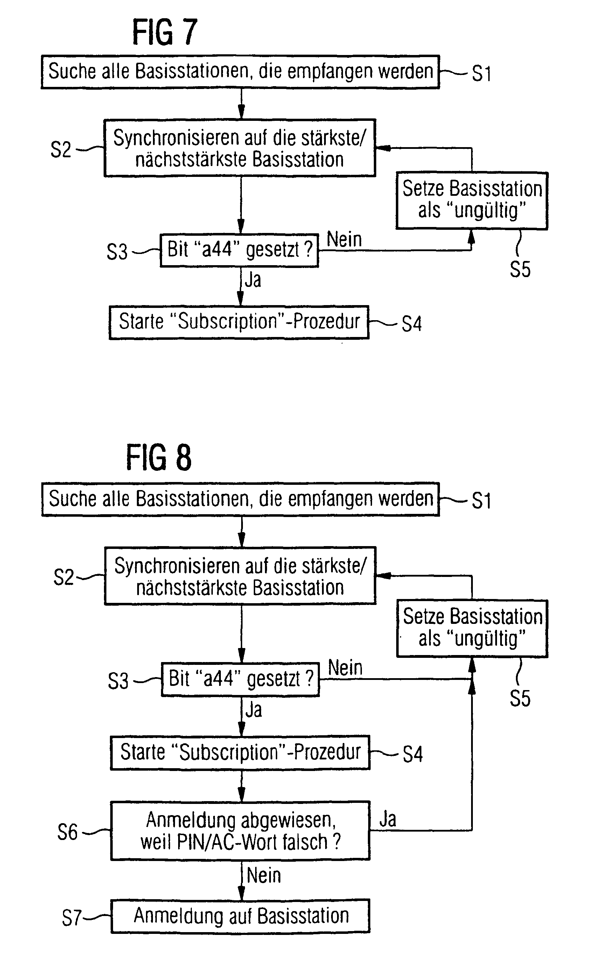

Derzeit auf dem Markt befindliche Mobilteile sind z.B. derart ausgebildet, daß gemäß FIGUR 7 zunächst in einem ersten Schritt S1 mehrere sendende Basisstationen gesucht werden und daß dann in einem zweiten Schritt S2 von den sendenden Basisstationen diejenige mit der stärksten Feldstärke, wobei die Feldstärke als Empfangskriterium für die Auswahl dient, für den Anmeldeversuch des Mobilteils genommen wird. Es sind alternativ aber auch andere Empfangskriterien für die Auswahl, wie z.B. CRC-Werte oder eine Kombination aus CRC-Werten und Feldstärkewerten, möglich.

In einem darauffolgenden dritten Schritt S3 überprüft das Mobilteil, ob die auf diese Weise ausgewählte Basisstation das "a44"-Bit gesetzt hat und wie beschrieben über die "Luft" "broadcastet".

Ist das der Fall, dann wird in einem vierten Schritt S4 gemäß der ETSI-Publikation ETS300175-5, Oktober 1992, Kap. 13; vgl. nachveröffentlichte DE-Patentanmeldung 19643658) die Anmeldung (Subskription) gestartet.

Ist das nicht der Fall, dann wird in einem fünften Schritt S5 die ausgewählte Basisstation als "ungültig" markiert und danach im zweiten Schritt S2 von den sendenden Basisstationen wieder diejenige mit der stärksten Feldstärke - insgesamt betrachtet also die nächststärkste Basisstation - für ein weiteren Anmeldeversuch des Mobilteils genommen.

Hiermit soll erreicht werden, daß das Handgerät immer die am nächsten befindliche Basisstation findet. Da öffentliche Basisstationen aber in der Regel mit gerichteten Antennen arbeiten, ist es in einem wie in FIGUR 6 dargestellten Szenario niemals möglich, das Handgerät an die private Basisstation R-BS anzumelden.

Derzeit gibt es drei mögliche Verfahren, um dem erläuterten technischen Problem zu begegnen:
i) Im privaten Bereich kann die Problematik dadurch abgeschwächt werden, daß die private Basisstation nach Aktivieren der Anmeldeprozedur nur für eine begrenzte Zeit, z.B. 30 Sekunden das "a44"-Bit ausstrahlt. Auf diese Weise kann der Benutzer gezielt in diesem begrenzten Zeitfenster anmelden, diese Methode ist jedoch für das vorstehend beschriebenen Szenario nicht zu gebrauchen.
ii) Auswertung der Feldstärke. Es werden mehrere Basisstationen gefunden, wobei die Basisstation mit der größten Feldstärke ausgesucht wird. Dies führt in dem vorstehend beschriebenen Szenario zu dauerhaftem Fehlschlagen der Anmeldung.
iii) Anwenden der Nachricht "Manuelle Eingabe der PARK-Kennung" (Manual entry of PARK). Hierbei wird die Kennung (Identity) der Basisstation vom Benutzer in das Handgerät eingegeben, das Handgerät sucht gezielt nur nach dieser Basisstation. Diese Methode wird jedoch in dem dargestellten Szenario nicht eingesetzt, weil der Benutzer die Kennung (Identity) der Basisstation gar nicht kennt.

Aus der US 5,471,671 ist ein Verfahren zum Anmelden von Mobilstationen bei einer Basisstation aus einer Vielzahl von Basisstationen bekannt, bei dem die Qualität des Übertragungskanals als wesentliches Entscheidungskriterium für die Auswahl der Basisstation herangezogen wird.

Aus der WO 96/38990 A2 ist ein Verfahren zum Aufbau eines bis zu acht Zellen umfassenden Funknetzes bekannt, bei dem die Basisstationen nach dem DECT-Standard arbeiten. Die DECT-Basisstationen werden untereinander und mit dem Netzabschluss eines öffentlichen Netzes oder einer Nebenstellenanlage über einen S₀-Bus verbunden.

Die der Erfindung zugrundeliegende Aufgabe besteht darin, das Subskripieren von Telekommunikationsgeräten bei mit den Telekommunikationsgeräten durch drahtlose Telekommunikation verbindbaren Gegenstationen in drahtlosen Telekommunikationssystemen, insbesondere von DECT-Mobilteilen bei DECT-Basisstationen in DECT-Systemen, dahingehend zu verbessern, daß die Wahrscheinlichkeit, daß die Telekommunikationsgeräte, insbesondere die DECT-Mobilteile, von jeweils mehreren gleichzeitig anmeldebereiten Gegenstationen, insbesondere den DECT-Basisstationen, gezielt bei einer beabsichtigten Gegenstation anmeldbar sind, steigt.

Diese Aufgabe wird ausgehend von dem im Oberbegriff des Patentanspruches 1 definierten Verfahren durch die im Kennzeichen des Patentanspruches 1 angegebenen Merkmale gelöst.

Die der Erfindung zugrundeliegende Idee besteht darin, Telekommunikationsgeräte bei mit den Telekommunikationsgeräten durch drahtlose Telekommunikation verbindbaren Gegenstationen in drahtlosen Telekommunikationssystemen der eingangs umrissenen Art, insbesondere von DECT-Mobilteilen bei DECT-Basisstationen in DECT-Systemen, derart zu subskripieren, daß alle empfangenen (gefundenen) Funknachrichten sendenden Basisstationen, welche das "a44"-Bit gesetzt und übertragen haben, z.B. wie bisher im Mobilteil gespeichert werden, und mit einer nach vorgebenen Empfangskriterien ausgewählten Basisstation eine bekannte Anmeldeprozedur gefahren wird. Schlägt diese Anmeldeprozedur fehl, so wird diese Basisstation, z.B. in einer Liste, als "ungültig" markiert und der gleiche Vorgang einschließlich der Anmeldeprozedur mit einer anderen Basisstation durchgeführt.

Dabei wird ausgenutzt, daß bei der Anmeldung ein PIN-Wort (Personal Identity Number) und/oder ein AC-Wort (Authentication Code) abgefragt wird. Ist das PIN-Wort/AC-Wort falsch, so wird der Anmeldeversuch abgewiesen. Im anderen Fall, wenn das PIN-Wort/AC-Wort richtig ist, ist das Mobilteil erfolgreich bei der Basisstation angemeldet.

Die Erweiterung gegenüber der bisherigen Methode (FIGUR 7) ist in FIGUR 8 dargestellt. Der sich mit der Realisierung ergebende Aufwand ist sehr viel höher als vielleicht auf ersten Blick vermutet wird, weil gemäß dem DECT-Luftschnittstellenprotokoll zusätzlich zu der DECT-Protokollschicht "2" auch die DECT-Protokollschicht "3" in die Anmeldungswiederholung involviert ist.

Je nachdem wieviele die Funknachrichten sendenden Basisstationen von dem Mobilteil empfangen werden, kann es unter Umständen recht lange dauern, bis eine Anmeldeprozedur erfolgreich abgeschlossen ist. Diese Zeit kann für den Benutzer mitunter inakzeptabel sein. Es ist deshalb gemäß Anspruch 2 vorteilhaft, daß die Zeitdauer für eine Subskription vom Benutzer einstellbar bzw. vom System vorgegeben ist.

Weitere vorteilhafte Weiterbildungen der Erfindung sind in den übrigen Unteransprüchen angegeben.

Ein Ausführungsbeispiel der Erfindung wird anhand der FIGUR 8 erläutert.

FIGUR 8 zeigt ausgehend von FIGUR 7 ein erweitertes Anmeldeverfahren zur Subskription von z.B. DECT-Mobilteilen R-MT an z.B. DECT-Basisstationen R-BS, P-BS. Die beiden Verfahren unterscheiden sich insbesondere dadurch, daß beim Anmeldeverfahren gemäß FIGUR 8 in einem sechsten Schritt S6 abgefragt wird, ob ein am Mobilteil eingegebenes PIN-Wort (Personal Identity Number) und/oder AC-Wort (Authentication Code) falsch oder richtig ist.

Ist das PIN-Wort und/oder AC-Wort falsch, dann wird in dem fünften Schritt S5 die ausgewählte Basisstation als "ungültig" markiert und danach im zweiten Schritt S2 von den sendenden Basisstationen wieder diejenige mit der stärksten Feldstärke - insgesamt betrachtet also die nächststärkste Basisstation - für ein weiteren Anmeldeversuch des Mobilteils genommen .

Ist das PIN-Wort und/oder AC-Wort hingegen richtig, dann wird in einem siebten Schritt S7 das Mobilteil bei der Basisstation angemeldet, womit die Anmeldeprozedur beendet ist.

Je nachdem wieviele die Funknachrichten sendenden Basisstationen R-BS, P-BS von dem Mobilteil R-MT empfangen werden, kann es unter Umständen recht lange dauern, bis eine Anmeldeprozedur erfolgreich abgeschlossen ist. Diese Zeit kann für den Benutzer mitunter inakzeptabel sein.

Es ist deshalb insbesondere in dem Mobilteil R-MT in Anlehnung an FIGUR 2 ein Zeitzähler ZZ vorhanden. Dieser in herkömmlicher Weise ausgebildete Zeitzähler ZZ kann vom Benutzer mit einer vom Benutzer definierten Zeitdauer über die Bedienoberfläche geladen werden (eingestellt werden) und/oder vom System über die Basisstation R-BS, P-BS, die hierfür ebenfalls in Anlehnung an FIGUR 2 einen Zeitzähler ZZ bzw. einen Speicher SP aufweist, vorgegeben und in Anlehnung an FIGUR 2 in einen Speicher SP des Mobilteils R-MT zwischengespeichert werden.

Der Speicher SP im Mobilteil dient darüber hinaus noch dazu die empfangenen (gefundenen) Basisstationen durch basisstationssspezifische Informationen und die als ungültig markierten basissstationen für die in den FIGUREN 7 und 8 dargestellten Anmeldeprozeduren abzuspeichern.

## Patentansprüche

1. Verfahren zum Subskripieren von Telekommunikationsgeräten bei mit den Telekommunikationsgeräten durch drahtlose Telekommunikation verbindbaren Gegenstationen in drahtlosen Telekommunikationssystemen, insbesondere von DECT-Mobilteilen bei DECT-Basisstationen in DECT-Systemen, bei dem die Telekommunikationsgeräte (R-MT)
a) an den Aufenthaltsorten in den drahtlosen Telekommunikationssystemen nach Primär-Gegenstationen (R-BS, P-BS) suchen, von denen drahtlos übertragene Nachrichten (FN) empfangen werden,
b) aufgrund von aufenthaltsortspezifischen Empfangskriterien von den Primär-Gegenstationen (R-BS, P-BS) zumindest erste Primär-Gegenstationen ermitteln, bei denen die Telekommunikationsgeräte (R-MT) versuchen, sich aufzusynchronisieren,
(c) überprüfen, ob in den von den ersten Primär-Gegenstationen übertragenen Nachrichten (FN) erste Informationen enthalten sind,
d) versuchen, falls die Überprüfungen ergeben, daß die erste Informationen nicht vorliegen, sich auf andere erste Primär-Gegenstationen als die bereits überprüften ersten Primär-Gegenstationen aufzusynchronisieren,
e) zum Subskripieren bei den überprüften ersten Primär-Gegenstationen, falls die Überprüfungen ergeben, daß die ersten Informationen vorliegen, vorgegebene Subskriptionsprozeduren starten,
f) im Rahmen der Subskriptionsprozeduren zweite Informationen (PIN) an die überprüften ersten Primär-Gegenstationen senden, mit denen die Subskriptionsberechtigungen der Telekommunikationsgeräte (R-MT) bei den überprüften ersten Primär-Gegenstationen festgestellt werden,
g) bei den überprüften ersten Primär-Gegenstationen subskripiert sind, falls festgestellt wird, daß die zweiten Informationen (PIN) zur Subskription bei den überprüften ersten Primär-Gegenstationen richtig sind,
**dadurch gekennzeichnet, daß**
die Telekommunikationsgeräte (R-MT), falls festgestellt wird, daß die zweiten Informationen (PIN) zur Subskription bei den überprüften ersten Primär-Gegenstationen nicht richtig sind, versuchen, sich auf andere erste Primär-Gegenstationen als die bereits überprüften ersten Primär-Gegenstationen aufzusynchronisieren.

2. Verfahren nach Anspruch 1, **dadurch gekennzeichnet, daß**
eine Subskriptionszeitdauer für das Subskripieren des Telekommunikationsgerätes (R-MT) bei den ersten Primär-Gegenstationen bzw. Primär-Gegenstationen (R-BS, P-BS) vorgegeben wird und/oder einstellbar ist.

3. Verfahren nach Anspruch 1 oder 2, **gekennzeichnet durch**
Anwendung in DECT-Systemen, wobei die Telekommunikationsgeräte (R-MT) DECT-Geräte und die Gegenstationen (R-BS, P-BS) DECT-Basisstationen und/oder DECT-Repeater sind.

4. Verfahren nach Anspruch 3, **dadurch gekennzeichnet, daß**
die DECT-Geräte DECT-Mobilteile oder DECT-Netzabschlußeinrichtungen sind.

5. Verfahren nach Anspruch 3 oder 4, **dadurch gekennzeichnet , daß**
die Nachrichten DECT-luftschnittstellenspezifische Protokollnachrichten sind.

6. Verfahren nach einem der Ansprüche 3 oder 5, **dadurch gekennzeichnet, daß**
das aufenthaltsortspezifische Empfangskriterium aus Feldstärke - und/oder CRC-Werten gebildet wird.

7. Verfahren nach Anspruch 5, **dadurch gekennzeichnet, daß**
die erste Information NWK-/DLC-Protokollschicht-bezogene Bitinformationen sind, die in MAC-Schicht-Broadcast-Meldungen übertragen werden.

8. Verfahren nach einem der Ansprüche 3 oder 7, **dadurch gekennzeichnet, daß**
die zweite Information ein PIN-Wort ist.

9. Verfahren nach einem der Ansprüche 3 oder 8, **dadurch gekennzeichnet , daß**
die zweite Information ein "Authentication Code"-Wort ist.

10. Verfahren nach Anspruch 1 oder 2, **gekennzeichnet durch**
Anwendung in GSM-Netzen, wobei die Telekommunikationsgeräte (R-MT) GSM-Geräte und die Gegenstationen (R-BS, P-BS) GSM-Basisstationen mit zugeordneten zentralen Vermittlungseinrichtungen sind.

11. Verfahren nach Anspruch 1 oder 2, **gekennzeichnet durch**
Anwendung in bezüglich der CDMA-/FDMA-/TDMA-Vielfachzugriffsmethoden hybriden Netzen, wobei die Telekommunikationsgeräte (R-MT) hybride Geräte und die Gegenstationen (R-BS, P-BS) hybride Basisstationen sind.

## Claims

1. Method for subscription of telecommunication devices at distant stations able to be connected by wireless telecommunication to the telecommunication devices in wireless telecommunication systems, especially of DECT mobile units at DECT base stations in DECT systems In communication systems, in which the residential mobile units (R-MT)
a) Search at the locations in the wireless telecommunication systems for distant base stations (R-BS, P-BS) from which wirelessly transmitted messages (FN) are received,
b) On the basis of location-based receive criteria of the distant base stations (R-BS, P-BS), determine at least first distant base stations, with which the telecommunication devices (R-MT) attempt to synchronize themselves,
(c) Check whether first information is contained in the messages (FN) transferred from the first distant base stations,
d) Attempt, if checks reveal that the first information is not available, to synchronize with first distant base stations other than the first distant base station already checked,
e) Start predetermined subscription procedures to subscribe at the first distant base stations checked if the checks reveal that the first information is present,
f) Within the context of the subscription procedures, send second information (PIN) to the checked first distant base stations, with which the subscription authorizations of the telecommunication devices (R-MT) are established at the checked first primary base stations,
g) Subscription is at the checked first distant base stations if it is established that the second information (PIN) is correct for subscription at the first distant base stations checked.
**characterized in that**,
the telecommunication devices (R-MT), if it is established that the second information (PIN) is not correct for subscription with the checked first distant base stations, synchronize with distant base stations other than the first distant base stations just checked.

2. Method according to claim 1, **characterized in that** a duration of subscription is predetermined and/or can be set for the subscription of the telecommunication device (R-MT) at the first distant residential base stations or public base stations (R-BS, P-BS).

3. Method in accordance with claim 1 or 2, **characterized by**
application in DECT systems, with the telecommunication devices (R-MT) being DECT devices and the distant stations (R-BS, P-BS) being DECT base stations and/or DECT repeaters.

4. Method according to claim 3, **characterized in that** the DECT devices are DECT mobile units or DECT network termination devices.

5. Method in accordance with claim 3 or 4, **characterized in that**
the messages are DECT air interface-specific protocol messages.

6. Method in accordance with one of the claims 3 or 5,
**characterized in that**
the location-specific receive criterion is formed from field strength and/or CRC values.

7. Method in accordance with claim 5, **characterized in that**
the first information is NWK-/DLC protocol layer-related bit information which is transmitted in MAC-layer broadcast messages.

8. Method in accordance with one of the claims 3 or 7,
**characterized in that**
the second Information is a PIN word.

9. Method in accordance with one of the claims 3 or 8,
**characterized in that**
the second Information is an "authentication code" word.

10. Method in accordance with claim 1 or 2, **characterized by**
application in GSM networks, where the telecommunication devices (R-MT) are GSM devices and the distant stations (R-BS, P-BS) are GSM base stations with assigned central switching devices.

11. Method in accordance with claim 1 or 2, **characterized by**
application in hybrid networks relating to the CDMA/FDMA/TDMA multiple access method, with the telecommunication devices (R-MT) being hybrid devices and the distant stations (R-BS, P-BS) being hybrid base stations.

## Revendications

1. Procédé pour inscrire des appareils de télécommunication à des stations correspondantes pouvant être reliées par télécommunication sans fil aux appareils de télécommunication dans des systèmes de télécommunication sans fil, notamment pour inscrire des unités mobiles DECT à des stations de base DECT de systèmes DECT, dans lequel les appareils de télécommunication (R-MT),
a) aux endroits de séjour dans les systèmes de télécommunication sans fil, cherchent des stations correspondantes primaires (R-BS, P-BS), par lesquelles des messages (FN) transmis sans fil sont reçus,
b) en raison de critères de réception, spécifiques à l'endroit de séjour, des stations correspondantes primaires (R-BS, P-BS), déterminent au moins des premières stations correspondantes primaires, sur lesquelles les appareils de télécommunication (R-MT) tentent de se synchroniser,
c) vérifient si des premières informations sont contenues dans les messages (FN) transmis par les premières stations correspondantes primaires,
d) tentent, au cas où il résulte des vérifications que les premières informations ne sont pas présentes, de se synchroniser sur des premières stations corespondantes primaires autres que les premières stations correspondantes primaires déjà vérifiées,
e) pour l'inscription aux premières stations correspondantes primaires vérifiées, au cas où il résulte des vérifications que les premières informations sont présentes, démarrent des procédures d'inscription prédéfinies,
f) dans le cadre des procédures d'inscription, émettent des deuxièmes informations (PIN) aux premières stations correspondantes primaires vérifiées, au moyen desquelles les autorisations d'inscription des appareils de télécommunications (R-MT) aux premières stations correspondantes primaires vérifiées sont constatées,
g) sont inscrits aux premières stations correspondantes primaires vérifiées, au cas où il est constaté que les deuxièmes informations (PIN) pour l'inscription aux premières stations correspondantes primaires vérifiées sont correctes,
**caractérisé en ce que**
les appareils de télécommunication (R-MT) tentent, au cas où il est constaté que les deuxièmes informations (PIN) pour l'inscription aux premières stations correspondantes primaires vérifiées ne sont pas correctes, de se synchroniser sur des premières stations correspondantes primaires autres que les premières stations correspondantes primaires déjà vérifiées.

2. Procédé selon la revendication 1, **caractérisé en ce qu'** une durée d'inscription pour inscrire l'appareil de télécommunication (R-MT) aux premières stations correspondantes primaires resp. aux stations correspondantes primaires (R-BS, P-BS) est prédéfinie et/ou réglable.

3. Procédé selon la revendication 1 ou 2, **caractérisé par** son application dans des systèmes DECT, les appareils de télécommunication (R-MT) étant des appareils DECT et les stations correspondantes (R-BS, P-BS) étant des stations de base DECT et/ou des répéteurs DECT.

4. Procédé selon la revendication 3, **caractérisé en ce que** les appareils DECT sont des unités mobiles DECT ou des dispositifs DECT de terminaison de réseau.

5. Procédé selon la revendication 3 ou 4, **caractérisé en ce que**
les messages sont des messages de protocole spécifiques à l'interface air DECT.

6. Procédé selon l'une des revendications 3 ou 5, **caractérisé en ce que**
le critère de réception spécifique à l'endroit de séjour est formé par des valeurs d'intensité de champ et/ou des valeurs CRC.

7. Procédé selon la revendication 5, **caractérisé en ce que** les premières informations sont des informations de bit relatives à la couche de protocole NWK / DLC, qui sont transmises dans des messages broadcast dans la couche MAC.

8. Procédé selon l'une des revendications 3 ou 7, **caractérisé en ce que**
la deuxième information est un mot PIN.

9. Procédé selon l'une des revendications 3 ou 8, **caractérisé en ce que**
la deuxième information est un mot « Authentification Code ».

10. Procédé selon la revendication 1 ou 2, **caractérisé par** son application dans des réseaux GSM, les appareils de télécommunication (R-MT) étant des appareils GSM et les stations correspondant (R-BS, P-BS) étant des stations de base GSM dotées de dispositifs de commutation centraux correspondants.

11. Procédé selon la revendication 1 ou 2, **caractérisé par** son application dans des réseaux hybrides par rapport aux méthodes d'accès multiple CDMA, FDMA, TDMA, les appareils de télécommunication (R-MT) étant des appareils hybrides et les stations correspondantes (R-BS, P-BS) étant des stations de base hybrides.
